# EUROPÄISCHE PATENTSCHRIFT

(11) **EP 2 072 429 B1**
(45) Veröffentlichungstag und Bekanntmachung des Hinweises auf die Patenterteilung: **07.07.2010**
(21) Anmeldenummer: 08020952.1
(22) Anmeldetag: 03.12.2008
(51) Int. Cl.: B65G 47/88

(54) **Anschlagmodul, insbesondere für automatisierte Bearbeitungs- und Fördereinrichtungen**
Stop module, especially for automated processing and transport devices
Module de butée, notamment pour des dispositifs de traitement et de transport automatisés

(30) Priorität: 21.12.2007 DE 102007062076
(43) Veröffentlichungstag der Anmeldung: 24.06.2009
(73) Patentinhaber: Robert Bosch GmbH, 70469 Stuttgart (DE)
(72) Erfinder: Ludwig, Peter, 72072 Tübingen (DE); Lindemann, Uwe, 71088 Holzgerlingen (DE)
(74) Vertreter: Maiß, Harald

(56) Entgegenhaltungen:
- DE-U1- 20 207 436
- JP-A- 4 000 032
- JP-A- 6 064 744
- US-A- 5 211 276

## Beschreibung

Die Erfindung betrifft ein Anschlagmodul, insbesondere für automatisierte Bearbeitungs- und Fördereinrichtungen, wobei an einem Grundkörper ein Anschlagelement für sich in einer Bewegungsrichtung in einer Bewegungsebene bewegende Gegenstände angeordnet ist, gemäß der im Oberbegriff des Patentanspruches 1 näher definierten Art.

Bei automatisierten Bearbeitungs- und Fördereinrichtungen, welche zum Transport von Gegenständen, insbesondere von Werkstücken oder auf Werkstückträgern befindlichen Werkstücken, ausgebildet sind, kann es aus verschiedenen Gründen nötig sein, den Transport der einzelnen Gegenstände, insbesondere zur Durchführung von Bearbeitungen an den Werkstücken während der Stillstandsphase, aber auch zum Abheben der Werkstücke bzw. Werkstückträger, anzuhalten. Zu diesem Zweck können an automatisierten Transporteinrichtungen Anschlagmodule mit einem Anschlagelement angeordnet werden, wobei das Anschlagelement zwischen einer ersten ausgefahrenen Position, in welcher das Anschlagelement in die Bewegungsbahn der auf der Transporteinrichtung transportierten Gegenstände eingreift, und einer zweiten abgesenkten Position, in welcher das Anschlagelement einen Transport von auf der Transporteinrichtung transportierten Gegenständen freigibt, bewegt werden kann.

Beispielsweise aus der EP 1 746 054 A1 ist ein Anschlagmodul mit einem an einem Grundkörper angeordneten Anschlagglied für sich in einer aktuellen Bewegungsrichtung bewegende Gegenstände bekannt. Hierbei ist das Anschlagglied mittels einer elektrischen Betätigung aus dieser Bewegungsebene heraus und in diese zurück bewegbar, wobei zur elektrischen Betätigung ein elektrischer Drehantrieb vorgesehen ist. Eine rotatorische Antriebsbewegung des elektrischen Drehantriebs wird dabei über ein als Kurbelgetriebe ausgebildetes Umsetzmittel in eine zur Bewegungsebene der Gegenstände hin oder aus dieser heraus gerichtete Linearbewegung des Anschlagglieds umgesetzt.

Nachteilhafterweise sind die zur Auf- bzw. Abbewegung des Anschlagglieds bei einem derartig ausgebildeten Anschlagmodul benötigten Kräfte sehr groß, so dass der elektrische Drehantrieb entsprechend stark dimensioniert werden muss und somit relativ große Kosten verursacht.

Aus der DE 202 07 436 U1 ist ein gattungsgemäßes Anschlagmodul für eine Fördereinrichtung in Form einer Rollenbahn bekannt. Gemäß der Fig. 2 der DE 202 07 436 U1 umfasst das Anschlagmodul ein Anschlagelement 12, mit dem Gegenstände, die auf der Rollenbahn transportiert werden, aufgehalten werden können. Das Anschlagelement kann mit einem elektrischen Drehantrieb zwischen zwei Endpositionen bewegt werden. In der ersten Endposition ragt das Anschlagelement in die Bewegungsebene der Gegenstände, wohingegen die Bewegungsebene in der zweiten Endposition des Anschlagelements freigegeben wird. Der elektrische Drehantrieb ist über ein Gelenkgetriebe 7; 6; 4 mit dem Anschlagelement gekoppelt, wobei das Gelenkgetriebe ein erstes Hebelelement 7 und ein zweites Hebelelement 8 umfasst, die über einen ersten Gelenkpunkt 14 miteinander verbunden sind.

Aus der JP 6-064 744 A ist ein weiteres Anschlagmodul für eine Fördereinrichtung bekannt. Bei diesem Anschlagmodul wird das Anschlagelement von einem Pneumatikzylinder betätigt, der über einen Kniehebelmechanismus mit dem Anschlagelement verbunden ist. Der Kniehebelmechanismus umfasst ein erstes und ein zweites Hebelelement, die über einen ersten Gelenkpunkt miteinander verbunden sind, wobei der Pneumatikzylinder über den ersten Gelenkpunkt mit dem Kniehebelmechanismus zusammenwirkt.

Aus der US 5 211 276 A ist ein Anschlagmodul für eine Fördereinrichtung bekannt, bei der das Anschlagelement über eine Exzentereinrichtung von einem elektrischen Drehantrieb bewegt wird.

Es ist Aufgabe der vorliegenden Erfindung, ein Anschlagmodul, insbesondere für automatisierte Bearbeitungs- und Fördereinrichtungen, mit einem an einem Grundkörper angeordneten Anschlagelement für sich in einer Bewegungsrichtung in einer Bewegungsebene bewegende Gegenstände zu schaffen, welches einen Mechanismus zur Bewegung des Anschlagelements zwischen einer in die Bewegungsebene der Gegenstände ragenden ersten Endposition und einer eine Bewegung von Gegenständen in der Bewegungsebene freigebenden zweiten Endposition bereitstellt, mittels welchem eine derartige Bewegung des Anschlagelements mit geringem Kraftaufwand auch bei eventuell großen von den Gegenständen auf das Anschlagelement wirkenden Kräften in einfacher Weise umsetzbar ist.

Diese Aufgabe wird gelöst mit einem Anschlagmodul, insbesondere für automatisierte Bearbeitungs- und Fördereinrichtungen, gemäß dem Patentanspruch 1.

Ein erfindungsgemäßes Anschlagmodul, insbesondere zur Vereinzelung von Gegenständen, hat den Vorteil, dass zur Bewegung des Anschlagelements zwischen seiner ersten Endposition und seiner zweiten Endposition durch eine entsprechende Anordnung der Hebelelemente der Kniehebeleinrichtung vorteilhafterweise nur sehr geringe Kräfte nötig sind. Hierdurch kann der mit der Kniehebeleinrichtung zusammenwirkende elektrische Drehantrieb vorteilhafterweise klein dimensioniert und somit entsprechend kostengünstig ausgebildet sein. Weiterhin ist es mit einer Kniehebeleinrichtung bei entsprechend ausgebildetem Anschlagelement möglich, das Anschlagelement bei sich in Anlage mit dem Anschlagelement befindlichem Gegenstand mit keiner oder nur einer geringen Gegenkraft in der ersten Endposition zu halten.

In einer vorteilhaften Ausbildung eines erfindungsgemäßen Anschlagmoduls ist es vorgesehen, dass der elektrische Drehantrieb über eine Pleueleinrichtung mit der Kniehebeleinrichtung zusammenwirkt. Mittels der Pleueleinrichtung kann auf einfache Weise eine von dem elektrischen Drehantrieb ausgehende rotatorische Bewegung in eine auf die Kniehebeleinrichtung wirkende translatorische Bewegung umgewandelt werden.

In der erfindungsgemäßen Ausgestaltung der Kniehebeleinrichtung ist das erste Hebelelement der Kniehebeleinrichtung in einem ersten Endbereich über einen zweiten Gelenkpunkt drehbar an dem Grundkörper angeordnet und wirkt in einem zweiten Endbereich über den ersten Gelenkpunkt drehbar mit einem ersten Endbereich des zweiten Hebelelements zusammen, wobei ein zweiter Endbereich des zweiten Hebelelements über einen dritten Gelenkpunkt mit einem dritten Hebelelement zusammenwirkt, welches über einen vierten Gelenkpunkt an dem Grundkörper drehbar festgelegt ist.

Zur Umsetzung der von dem elektrischen Drehantrieb auf die Kniehebeleinrichtung wirkenden, wenigstens annähernd in Vertikalrichtung verlaufenden Bewegung kann es in einer einfachen Ausbildung eines erfindungsgemäßen Anschlagmoduls vorgesehen sein, dass die Pleueleinrichtung an ihrem der Kniehebeleinrichtung abgewandten Ende mit einem von dem elektrischen Drehantrieb antreibbaren Nabenelement zusammenwirkt, wobei ein insbesondere runder Endbereich der Pleueleinrichtung derart exzentrisch zu einer Antriebswelle des elektrischen Drehantriebs angeordnet ist, dass eine Drehung des Nabenelements in einer wenigstens teilweise vertikalen Bewegung der Pleueleinrichtung resultiert, mittels welcher das Anschlagelement über die Kniehebeleinrichtung zwischen dessen erster Endposition und dessen zweiter Endposition bewegbar ist.

Wenn das erste Hebelelement und das zweite Hebelelement der Kniehebeleinrichtung bei sich in der ersten Position befindlichem Anschlagelement wenigstens annähernd parallel zueinander angeordnet sind, können eventuell in Bewegungsrichtung der Gegenstände auf das Anschlagelement wirkende Kräfte schon von der Kniehebeleinrichtung aufgefangen werden, da eine in diesem Fall wenigstens annähernd in Richtung der Hebelelemente wirkende Kraft keine oder nur eine geringe Kraft senkrecht, also auf die Pleueleinrichtung wirkend, zu den Hebelelementen verursacht.

Ein erfindungsgemäß ausgebildetes Anschlagelement weist einen sich in Bewegungsrichtung der Gegenstände erstreckenden Körper auf, welcher in einem dem dritten Hebelelement zugewandten ersten Endbereich eine wenigstens annähernd in Bewegungsrichtung der Gegenstände verlaufende Ausnehmung aufweist über welche das Anschlagelement mit dem dritten Hebelelement zusammenwirkt.

Da mit dem Anschlagelement zusammenwirkende Gegenstände teilweise mit relativ großen Geschwindigkeiten auf das Anschlagelement stoßen, kann es in einer die Gegenstände schonenden Ausführungsvariante eines erfindungsgemäßen Anschlagmoduls vorgesehen sein, dass der Körper des Anschlagelements in einem dem dritten Hebelelement abgewandten zweiten Endbereich mit einer Dämpfungseinrichtung zur Dämpfung einer Bewegung des Anschlagelements von einer ersten Anschlagstellung in eine gegenüber der ersten Anschlagstellung wenigstens annähernd in Bewegungsrichtung der Gegenstände versetzte zweite Endanschlagstellung bei einem an dem Anschlagelement anliegenden Gegenstand zusammenwirkt. Hierdurch können die auf die bei einem Abstoppen durch das Anschlagelement auf die Gegenstände wirkenden Kräfte vorteilhafterweise stark reduziert werden.

Dies ist insbesondere vorteilhaft, wenn die Gegenstände als Werkstückträger ausgebildet sind, auf denen Werkstücke beispielsweise lose angeordnet sind. Hier kann durch den Einsatz einer Dämpfungseinrichtung sichergestellt werden, dass eine Position eines sich auf dem Werkstückträger befindlichen Werkstücks durch das Abstoppen bei einer Anlage mit dem Anschlagelement des Anschlagmoduls sich nicht verändert. Bei der Dämpfungseinrichtung kann es sich um eine pneumatische oder elektrische Dämpfungseinrichtung handeln.

In einer vorteilhaften Ausführung der Dämpfungseinrichtung ist es vorgesehen, dass die Dämpfungseinrichtung mit einem Rotationsdämpfer ausgebildet ist, welcher eine Bewegung des Anschlagelements von der ersten Anschlagstellung in die zweite Endanschlagstellung dämpft.

Der Rotationsdämpfer kann in einer vorteilhaften Ausbildung der Erfindung einen inneren Rotor und einen äußeren Rotor aufweisen und insbesondere als Gerotor ausgebildet sein, wobei der äußere Rotor exzentrisch zu dem inneren Rotor angeordnet ist und eine Anzahl von mit Zähnen des inneren Rotors zusammenwirkenden Ausnehmungen um eins größer als die Zahl der Zähne des inneren Rotors ist.

Um auf einfache Weise ein auf das Anschlagelement wirkendes Bremsmoment zu erzeugen, kann es in einer vorteilhaften Ausbildung der Erfindung vorgesehen sein, dass der Rotationsdämpfer eine insbesondere verstellbar ausgebildete Drosseleinrichtung aufweist, mittels welcher ein von dem Rotationsdämpfer während einer Rotation erzeugter Förderstrom drosselbar ist.

In einer konstruktiv einfach ausgebildeten Anordnung des Rotationsdämpfers an dem Anschlagmodul ist der innere Rotor des Rotationsdämpfers auf einer Achse mit einem Drehhebel angeordnet, welcher die wenigstens annähernd translatorische Bewegung des Anschlagelements zwischen seiner ersten Anschlagstellung und seiner zweiten Anschlagstellung in eine rotatorische Bewegung umwandelt.

Um eine sehr kraftarme Rückführung des Anschlagelements von seiner zweiten Endanschlagstellung in seine erste Endstellung zu gewährleisten, kann es in einer vorteilhaften Ausbildung der Erfindung vorgesehen sein, dass der innere Rotor des Rotationsdämpfers über eine Freilaufeinrichtung mit dem Drehhebel zusammenwirkt, wobei die Freilaufeinrichtung den inneren Rotor des Rotationsdämpfers von einer derartigen Drehung des Drehhebels entkoppelt, welche das Anschlagelement von seiner zweiten Endanschlagstellung in seine erste Anschlagstellung bewegt.

Zur Rückstellung des Anschlagmoduls aus seiner zweiten Endanschlagsstellung in seine erste Endstellung ist es zweckmäßig, wenn eine Rückstelleinrichtung vorgehen ist.

In einer sehr einfachen Anordnung der Rückstelleinrichtung kann diese über den Drehhebel mit dem Anschlagelement zusammenwirken und hierdurch das Anschlagelement von seiner zweiten Endanschlagstellung in seine erste Endstellung bewegen.

Die Rückstelleinrichtung kann dabei eine als Druckfeder oder Zugfeder ausgebildete Federeinrichtung, insbesondere eine Konstantkraftfeder, aufweisen, welche an dem Drehhebel angeordnet ist, welcher wiederum mit dem zweiten Endbereich des Anschlagelements zusammenwirkt.

Weitere Vorteile und vorteilhafte Ausgestaltungen des Gegenstandes nach der Erfindung ergeben sich aus den Patentansprüchen und den anhand der Zeichnung prinzipiell beschriebenen Ausführungsbeispielen.

Es zeigen:
Figur 1 eine dreidimensionale Ansicht eines Anschlagmoduls mit einem in einer oberen ersten Position dargestellten Anschlagelement;
Figur 2 eine Explosionsdarstellung des Anschlagmoduls der Figur 1;
Figur 3 eine Mittelschnittdarstellung durch das Anschlagmodul der Figur 1;
Figur 4 eine Schnittdarstellung durch das Anschlagmodul entlang der Achse A-A in Figur 2;
Figur 5 eine weitere Schnittdarstellung durch das Anschlagmodul entlang der Achse B-B in der Figur 2;
Figur 6 eine Explosionszeichnung eines alternativ zu dem in den Figuren 1 bis 5 ausgebildeten Anschlagmoduls; und
Figur 7 eine Schnittdarstellung durch das Anschlagmodul der Figur 6, wobei der Schnitt durch das Anschlagmodul analog zu der in der Figur 3 dargestellten Achse B-B verläuft.

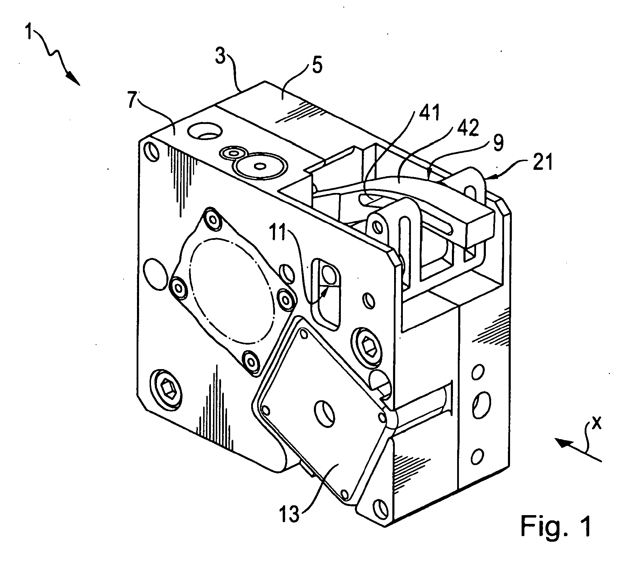

Die Figuren 1 bis 5 zeigen ein erstes Ausführungsbeispiel eines Anschlagmoduls 1, welches insbesondere in automatisierten Bearbeitungs- und Fördereinrichtungen eingesetzt wird, um sich in einer Bewegungsrichtung X in einer Bewegungsebene bewegende Gegenstände, beispielsweise Werkstücke oder Werkstückträger oder dergleichen, zu vereinzeln. Nach einer Vereinzelung der Gegenstände können diese individuell behandelt, beispielsweise bearbeitet, umgeleitet usw. werden.

Das Anschlagmodul 1 ist mit einem Grundkörper 3 ausgebildet, welcher sich vorliegend aus zwei Grundkörperelementen 5 und 7 zusammensetzt. Das Anschlagmodul 1 weist weiterhin ein Anschlagelement 9 auf, welches zum Abstoppen bzw. Vereinzeln von in der Bewegungsrichtung X bewegten Gegenständen vorgesehen ist, wobei das Anschlagelement 9 mittels einer Kniehebeleinrichtung 11 von einer in der Figur 1 dargestellten, in die Bewegungsebene der Gegenstände ragenden ersten Endposition in eine eine Bewegung der Gegenstände entlang der Bewegungsrichtung X freigebende untere zweite Endposition und umgekehrt bewegbar ist. Zum Antrieb der Kniehebeleinrichtung ist eine als elektrischer Drehantrieb 13 ausgebildete Antriebseinrichtung vorgesehen.

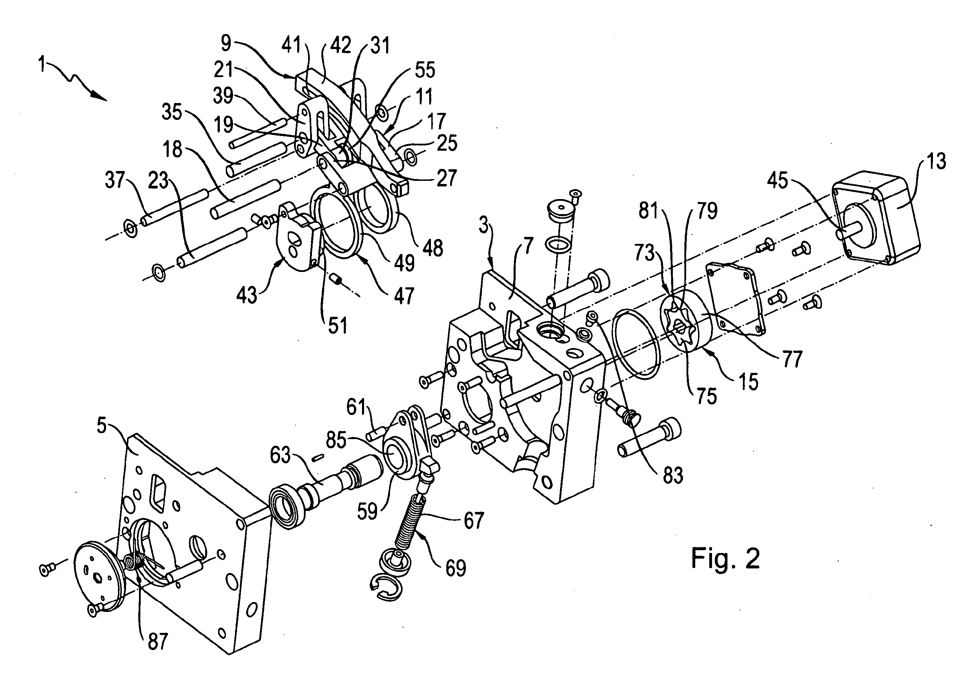

Die einzelnen Elemente des Anschlagmoduls 1 und deren räumliche Anordnung zueinander ist in der in der Figur 2 dargestellten Explosionsdarstellung ersichtlich.

Das Anschlagmodul 1 weist neben einem Mechanismus zur Bewegung des Anschlagelements 9 in die Bewegungsebene und aus der Bewegungsebene der Gegenstände auch eine Dämpfungseinrichtung 15 zur Dämpfung einer in Anlage mit dem Anschlagelement 9 kommenden Gegenstands auf.

Im Folgenden wird zunächst näher auf den Mechanismus zur Bewegung des Anschlagelements 9 in die Bewegungsebene und aus der Bewegungsebene der Gegenstände eingegangen.

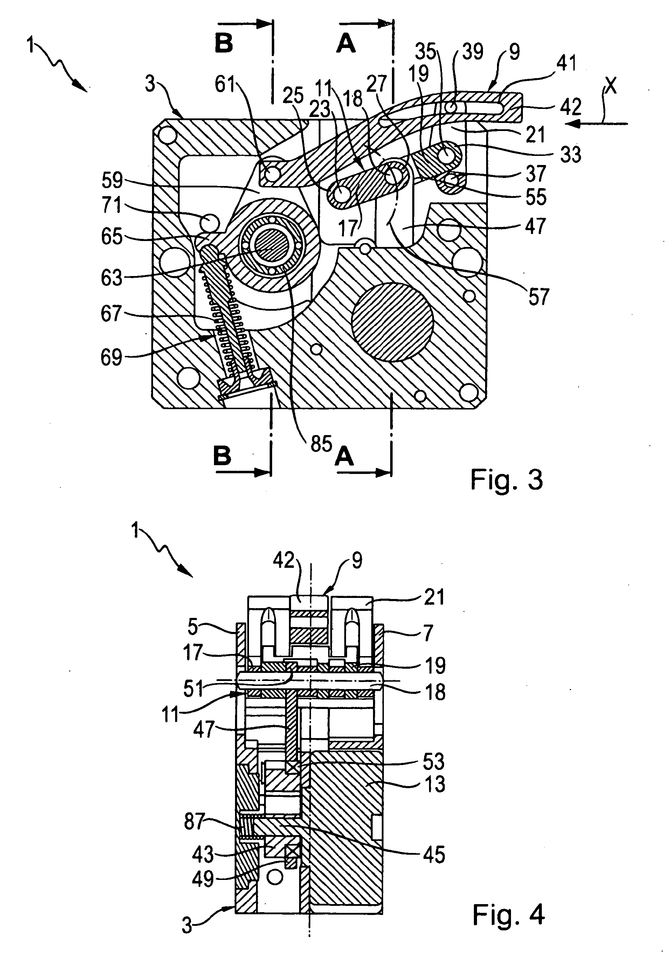

In Figur 3 ist ein Schnitt durch eine Mittelachse des Anschlagmoduls 1 dargestellt. Hierbei ist die Kniehebeleinrichtung 11 ersichtlich, welche mit einem ersten Hebelelement 17 und einem über einen ersten Gelenkpunkt 18 mit dem ersten Hebelelement 17 verbundenen zweiten Hebelelement 19 ausgebildet ist, wobei das zweite Hebelelement 19 der Kniehebeleinrichtung 11 mit einem weiteren dritten Hebelelement 21 zusammenwirkt, welches wiederum mit dem Anschlagelement 9 des Anschlagmoduls 1 zusammenwirkt.

Ein erster Endbereich 25 des ersten Hebelelements 17 der Kniehebeleinrichtung 11 ist dabei über ein einen zweiten Gelenkpunkt 23 bildendes erstes Stiftelement drehbar in dem Grundkörper 3 des Anschlagmoduls 1 angeordnet. Ein dem ersten Endbereich 25 des ersten Hebelelements 17 gegenüberliegender zweiter Endbereich 27 des ersten Hebelelements 17 ist mittels eines den ersten Gelenkpunkt 18 bildenden zweiten Stiftelements gelenkig mit einem ersten Endbereich 31 des zweiten Hebelelements 19 verbunden. Ein dem ersten Endbereich 31 des zweiten Hebelelements 19 gegenüberliegender zweiter Endbereich 33 des zweiten Hebelelements 19 ist wiederum über einen einen dritten Gelenkpunkt 35 bildendes drittes Stiftelement drehbar an dem dritten Hebelelement 21 angeordnet.

Das dritte Hebelelement 21 ist mittels eines einen vierten Gelenkpunkt 27 bildenden vierten Stiftelements 37 an dem Grundkörper 3 des Anschlagmoduls 1 angeordnet. Das dritte Hebelelement 21 ist weiterhin über ein fünftes Stiftelement 39 in einer Ausnehmung 41 des Anschlagelements 9 geführt, wobei das Anschlagelement 9 mit einem sich im Wesentlichen in Bewegungsrichtung der Gegenstände erstreckenden Körper 42 ausgebildet ist, in welchem die sich ebenfalls wenigstens annähernd in Bewegungsrichtung der Gegenstände verlaufende Ausnehmung 41 angeordnet ist, so dass das Anschlagelement 9 bei unbewegtem dritten Hebelelement 21 in Bewegungsrichtung X der Gegenstände gegenüber dem dritten Hebelelement 21 bewegbar ist.

Der dritte Gelenkpunkt 35 ist an dem dritten Hebelelement 21 zwischen dem vierten Gelenkpunkt 37 und dem fünften Stiftelement 39 angeordnet. Das erste Hebelelement 17 und das zweite Hebelelement 19 der Kniehebeleinrichtung 11 sind bei in die Bewegungsebene der Gegenstände ragendem Anschlagelement 9 wenigstens annähernd parallel zueinander angeordnet, d. h. der erste Gelenkpunkt 18, der zweite Gelenkpunkt 23 und der dritte Gelenkpunkt 35 liegen wenigstens annähernd auf einer Achse.

Der elektrische Drehantrieb 13 ist wenigstens annähernd unterhalb des ersten Gelenkpunkts 18 angeordnet, wobei der elektrische Drehantrieb 13 mittels eines beispielsweise in der Figur 4 ersichtlichen, auf einer Antriebsachse 45 des elektrischen Drehantriebs 13 angeordneten Nabenelements 43 und einer exzentrisch zu dem Nabenelement 43 auf der Antriebsachse 45 des elektrischen Drehantriebs 13 angeordneten Pleueleinrichtung 47 mit dem ersten Gelenkpunkt 18 zusammenwirkt.

Die Pleueleinrichtung 47 ist dabei mit einem runden Endbereich 49 ausgebildet, welcher ein auf dem Nabenelement 43 angeordnetes Kugellager 48 umfasst, so dass die Pleueleinrichtung 47 über ein zwischen der Pleueleinrichtung 47 und dem Nabenelement 43 angeordneten O-Ring 53 drehbar mit dem Nabenelement 43 verbunden ist.

Eine Drehung der Antriebsachse 45 des elektrischen Drehantriebs 13 resultiert in einer Drehung des Nabenelements 43, welches durch die exzentrische Anordnung zur Pleueleinrichtung 47 in einer Drehbewegung des runden Endbereichs 49 der Pleueleinrichtung 47 um die Antriebsachse 45 resultiert.

Da die Pleueleinrichtung 47 an ihrem oberen Endbereich 55 über den ersten Gelenkpunkt 18 mit dem ersten Hebelelement 17 der Kniehebeleinrichtung 11 verbunden ist, wird die Pleucleinrichtung 47 an ihrem oberen Ende durch eine Drehung der Antriebsachse 45 des elektrischen Drehantriebs 13 auf einer um den zweiten Gelenkpunkt 23 verlaufenden Kreisbahn 57 aus dem in der Figur 3 gezeigten Zustand nach unten bewegt.

Eine derartige Bewegung des ersten Hebelelements 17 nach unten dreht über den ersten Gelenkpunkt 18 das zweite Hebelelement 19 der Kniehebeleinrichtung 11, wodurch wiederum der dritte Gelenkpunkt 35 wenigstens annähernd in Richtung des zweiten Gelenkpunkts 23 bewegt wird. Hierdurch wird das dritte Hebelelement 21 um den vierten Gelenkpunkt 37 gedreht, so dass auf das Anschlagelement 9 eine wenigsten teilweise nach unten gerichtete Kraft wirkt und das Anschlagelement 9 aus der Bewegungsebene der Gegenstände zur Freigabe deren Bewegung in Bewegungsrichtung X bewegt wird.

Durch eine Umkehr der Drehrichtung der Antriebsachse 45 durch den elektrischen Drehantrieb 13 können die oben beschriebenen Vorgänge in umgekehrter Bewegungsrichtung ausgeführt werden, so dass das Anschlagelement 9 aus der unteren zweiten Endposition zurück in seine obere erste Endposition bewegt werden kann.

Hierbei ist es auch denkbar, dass das Zusammenspiel des elektrischen Drehantriebs mit dem Nabenelement, der Pleueleinrichtung und der Kniehebeleinrichtung derart ausgebildet ist, dass der elektrische Drehantrieb ausschließlich durch eine Drehung der Antriebsachse in einer Richtung sowohl eine Bewegung des Anschlagelemerlts aus der Bewegungsebene der Gegenstände als auch eine Bewegung des Anschlagelements in die Bewegungsebene der Gegenstände ausführen kann.

Wie bereits weiter oben erwähnt, weist das Anschlagmodul 1 eine Dämpfungseinrichtung 15 auf. Die Dämpfungseinrichtung 15 ist dazu vorgesehen, eine Bewegung des Anschlagelements 9 aus einer beispielsweise in der Fig. 3 ersichtlichen ersten Anschlagstellung in eine gegenüber der ersten Anschlagstellung in Bewegungsrichtung X der Gegenstände versetzte zweite Endanschlagstellung bei einem an dem Anschlagelement 9 anliegenden Gegenstand abzudämpfen.

Hierzu ist das Anschlagelement 9 wie bereits oben beschrieben bei feststehendem dritten Hebelelement 21 gegenüber dem dritten Hebelelement 21 durch das in der Ausnehmung 41 des Körpers 42 des Anschlagelements 9 gerührte fünfte Stiftelement 39 in Bewegungsrichtung X der Gegenstände verschiebbar.

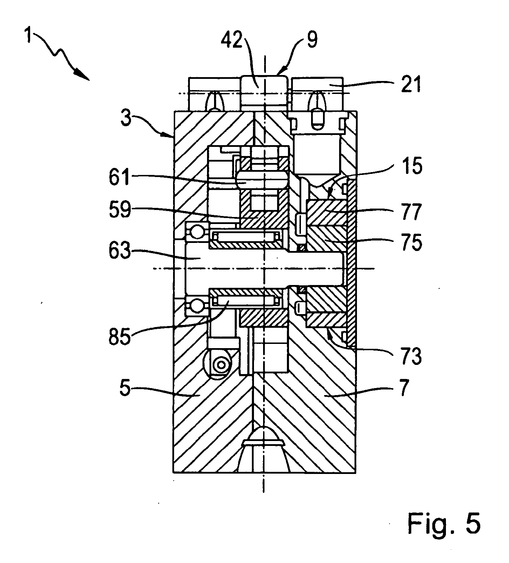

Kommt ein in Bewegungsrichtung X in der Bewegungsebene bewegter Gegenstand mit dem sich in der ersten Endstellung befindlichen Anschlagelement 9 in Kontakt, so bewegt der Gegenstand durch seine auf das Anschlagelement 9 wirkende Kraft das Anschlagelement 9 in seiner Bewegungsrichtung. Hierdurch wird ein insbesondere in den Figuren 3 und 5 ersichtlicher Drehhebel 59, welcher an einem dem fünften Stiftelement 39 des Anschlagelements 9 abgewandten Ende des Anschlagelements 9 über einen fünften Gelenkpunkt 61 drehbar mit dem Anschlagelement 9 verbunden ist, um eine in dem Grundkörper 3 gelagerte Welle 63 gedreht. Der Drehhebel 59 ist dabei auf der Welle 63 angeordnet, so dass sich die Welle 63 bei einer derartigen Drehrichtung des Drehhebels 59 entsprechend mitdreht.

Der Drehhebel 59 weist einen Vorsprung 65 auf, welcher bei in seiner ersten Endstellung befindlichem Anschlagelement 9 mit einer in diesem Zustand im Wesentlichen unvorgespannten Rückstelleinrichtung zusammenwirkt, welche vorliegend als mit einer Druckfeder 67 ausgebildete Federeinrichtung 69 ausgebildet ist.

Bei einer Überführung des Anschlagelements 9 von seiner ersten Anschlagstellung in seine zweite Endanschlagstellung wird die Druckfeder 67 der Federeinrichtung 69 durch eine daraus resultierende Drehung des Drehhebels 59 vorgespannt und wirkt der von dem an dem Anschlagelement 9 anliegenden Gegenstand auf das Anschlagelement 9 ausgeübten Kraft entgegen.

Wird nun das Anschlagelement 9 über die Kniehebeleinrichtung 11 von dem elektrischen Drehantrieb 13 in seine untere zweite Position überführt, so gerät der an dem Anschlagelement 9 angeordnete Gegenstand außer Eingriff mit dem Anschlagelement 9, wodurch an dem Anschlagelement 9 keine Gegenkraft zur der von der vorgespannten Druckfeder 67 der Federeinrichtung 69 mittels des Drehhebels 59 auf das Anschlagelement 9 wirkenden Kraft mehr vorliegt. Die Druckfeder 67 der Federeinrichtung 69 dreht somit den Drehhebel 59 zurück in die beispielsweise in der Figur 3 dargestellte Position.

Begrenzt wird diese Bewegung des Drehhebels 59 von einem in dem Grundkörper 3 angeordneten sechsten Stiftelement 71, welches an einer oberen Seite des Vorsprungs 65 des Drehhebels 59 angeordnet ist.

Auf der Welle 63 ist neben dem Drehhebel 59 in einem hierzu seitlich versetzten Bereich ein Rotationsdämpfer 73 angeordnet. Der Rotationsdämpfer, welcher in der Figur 1 und 5 ersichtlich ist, ist dabei insbesondere als Gerotor 73 ausgebildet und weist einen drehfest auf der Welle 63 angeordneten inneren Rotor 75 und einen in dem Grundkörper 3 gelagerten äußeren Rotor 77 auf, wobei der äußere Rotor 77 exzentrisch zu dem inneren Rotor 75 angeordnet ist. Eine Anzahl von Zähnen 79 des inneren Rotors 75 - vorliegend sechs - ist dabei um eins kleiner als eine Anzahl von mit den Zähnen 79 des inneren Rotors 75 zusammenwirkenden Ausnehmungen 81 des äußeren Rotors 77 - vorliegend sieben.

Der innere Rotor 75 des Rotationsdämpfers 73, welcher über eine formschlüssige Verbindung mit der Welle 63 verbunden ist, wird bei einer Drehung des Drehhebels 59 über die Welle 63 in Drehung versetzt.

Bei einer Drehung des Rotationsdämpfers 73 entstehen zwischen den Berührungspunkten von innerem Rotor 75 und äußerem Rotor 77 Verdrängungskammern, deren Volumen sich bei der Drehung ändert. Diese Veränderung erfolgt sinusförmig, wodurch ein sehr gleichmäßiger Pumpvorgang erzeugt wird. Infolge der zwangsläufigen Verdrängung verhält sich ein von dem Rotationsdämpfer 73 erzeugter und von einem nicht kompressiblen Fluid, wie beispielsweise einem Öl, übertragener Fluid-Förderstrom proportional zur Drehzahl. Dieser Fluid-Förderstrom kann von einer insbesondere verstellbar ausgebildeten Drosseleinrichtung 83 derart beeinflusst werden, dass ein auf die Welle 63 wirkendes und über den Drehhebel 59 einer Bewegung des Anschlagelements 9 von seiner ersten Anschlagstellung in seine zweite Endanschlagstellung entgegenwirkendes Bremsmoment erzeugt wird.

Mittels dieses Bremsmoments kann eine Bewegung des von seiner ersten Anschlagstellung durch einen Gegenstand in seine zweite Endanschlagstellung bewegten Anschlagelements 9 gedämpft werden und somit die auf den Gegenstand wirkenden Kräfte vorteilhafterweise reduziert werden.

Auf der Welle 63 ist weiterhin eine Freilaufeinrichtung 85 angeordnet, mittels welcher eine Bewegung des Drehhebels 59 zur Bewegung des Anschlagelements 9 von seiner zweiten Endanschlagstellung in seine erste Anschlagstellung von dem Rotationsdämpfer 73 entkoppelt ist, so dass eine derartige Bewegung des Anschlagelements 9 mit sehr geringem Kraftaufwand durchführbar ist und die Druckfeder 67 der Federeinrichtung 69 entsprechend gering dimensioniert ausgebildet werden kann.

Der Bewegungsablauf des Anschlagmoduls 1 bei einem mit dem Anschlagelement 9 in Anlage kommenden Gegenstandes verläuft somit wie folgt:

Der an das Anschlagelement 9 auflaufende Gegenstand verschiebt das Anschlagelement 9 von seiner ersten Endstellung in seine zweite Anschlagstellung, wodurch der Drehhebel 59 die ebenfalls mit dem Drehhebel 59 zusammenwirkende Druckfeder 67 der Federeinrichtung 69 spannt. Der Gegenstand wird dabei auf der Fördereinrichtung fixiert.

Um den Gegenstand wieder freizugeben, dreht der elektrische Drehantrieb 13, welcher vorliegend als Schrittmotor ausgebildet ist, das Nabenelement 43, welches exzentrisch zu der Pleueleinrichtung 47 angeordnet ist. Durch diese Drehbewegung vollzieht die Pleueleinrichtung 47 eine Vertikalbewegung nach unten, wodurch das Anschlagelement 9 über die Kniehebeleinrichtung 11 von seiner in die Bewegungsebene der Gegenstände ragenden ersten Position in seine die Bewegung von Gegenständen in der Bewegungsrichtung X freigebende zweite Position abgesenkt werden kann. Während dieser Abwärtsbewegung des Anschlagelements 9 entspannt sich die Druckfeder 67 der Federeinrichtung 69 und bewegt den Drehhebel 59 zurück in seine Ausgangsstellung.

Durch eine entgegengesetzte Drehbewegung des elektrischen Drehantriebs 13 kann das Anschlagelement 9 nun zurück in seine erste Position bewegt werden.

In der Figur 4 ist eine Schenkelfeder 87 dargestellt, welche in einem stromlosen Zustand dafür vorgesehen ist, das Anschlagelement 9 zurück in seine erste Position zu bewegen.

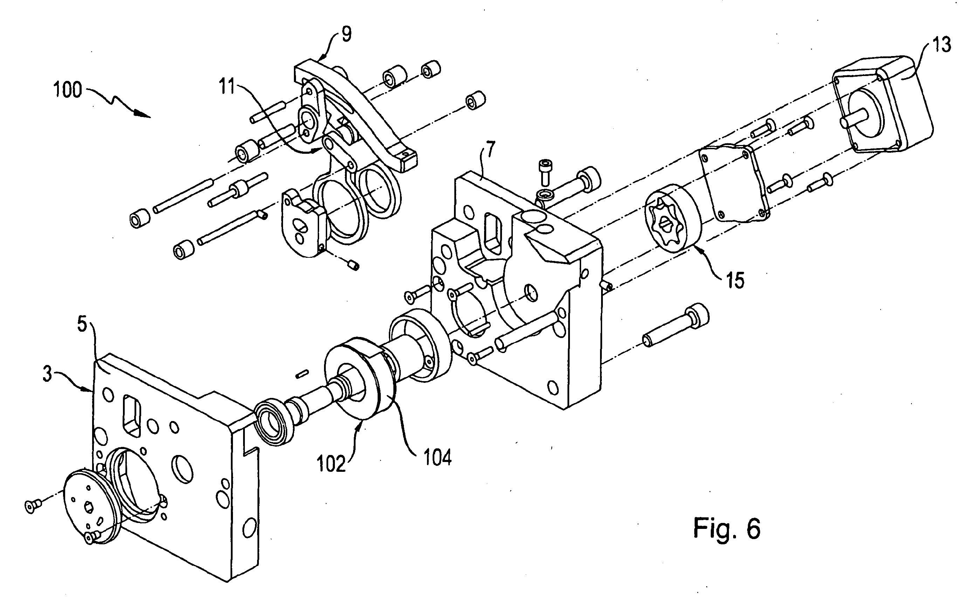

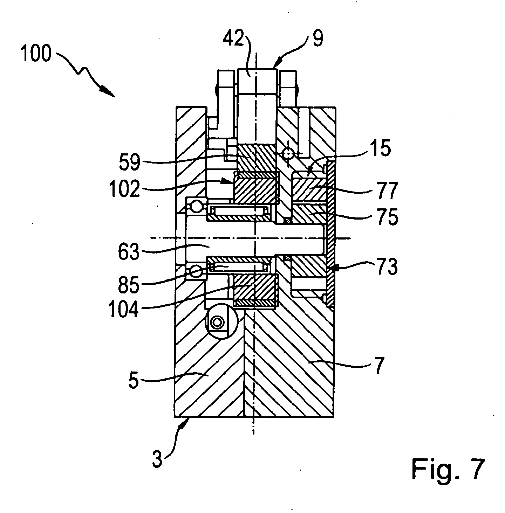

In den Figuren 6 und 7 ist ein weiteres Anschlagmodul 100 gezeigt, welches gegenüber dem in den Figuren 1 bis 5 gezeigten Anschlagmodul 1 im Wesentlichen hinsichtlich seiner Rückstelleinrichtung 102 verändert ausgebildet ist. Aus Gründen der Übersichtlichkeit sind funktionsgleiche Bauelemente mit den gleichen Bezugszeichen wie bei der Ausführung gemäß den Figuren 1 bis 5 bezeichnet.

Die Rückstelleinrichtung weist hierbei eine als Zugfeder 104 ausgebildete Federeinrichtung 102 auf, welche insbesondere in Form einer Konstantkraftfeder ausgebildet ist. Die Zugfeder 104 ist dabei auf der Welle 63 derart angeordnet, dass die Federeinrichtung 102 bei einem sich in seiner zweiten Endanschlagstellung befindlichem Anschlagelement 9 eine Kraft ausübt, welche das Anschlagelement 9 in Richtung seiner ersten Anschlagstellung 9 drückt.

## Patentansprüche

1. Anschlagmodul, insbesondere für automatisierte Bearbeitungs- und Fördereinrichtungen, wobei an einem Grundkörper (3) ein Anschlagelement (9, 202) für sich in einer Bewegungsrichtung (X) in einer Bewegungsebene bewegende Gegenstände angeordnet ist, und wobei das Anschlagelement (9, 202) mittels eines elektrischen Drehantriebs (13) zwischen einer ersten Endposition, in welcher das Anschlagelement (9, 202) in die Bewegungsebene der Gegenstände ragt, und einer zweiten Endposition, in welcher das Anschlagelement (9, 202) eine Bewegung von Gegenständen in der Bewegungsebene freigibt, bewegbar ist, wobei die Bewegung des Anschlagelements (9, 202) in und aus der Bewegungsebene von Gegenständen durch eine mit dem elektrischen Drehantrieb (13) zusammenwirkende Kniehebeleinrichtung (11) umgesetzt ist, welche wenigstens **ein erstes und ein zweites Hebelelement (17, 19) aufweist, die** über einen ersten Gelenkpunkt (18) miteinander **verbunden sind,**
**dadurch gekennzeichnet,**
**dass** der elektrische Drehantrieb (13) mit dem ersten Gelenkpunkt (18) zusammenwirkt, **wobei** das erste Hebelelement (17) der Kniehebeleinrichtung (11) in einem ersten Endbereich (25) über einen zweiten Gelenkpunkt (23) drehbar an dem Grundkörper (3) angeordnet ist und in einem zweiten Endbereich (27) über den ersten Gelenkpunkt (18) drehbar mit einem ersten Endbereich (31) des zweiten Hebelelements (19) zusammenwirkt, und wobei ein zweiter Endbereich (27) des zweiten Hebelelements (19) über einen dritten Gelenkpunkt (35) mit einem dritten Hebelelement (21) zusammenwirkt, welches über einen vierten Gelenkpunkt (37) an dem Grundkörper drehbar festgelegt ist, wobei das Anschlagelement (9) mit einem sich in Bewegungsrichtung der Gegenstände erstreckenden Körper (42) ausgebildet ist, welcher in einem dem dritten Hebelelement (21) zugewandten ersten Endbereich eine wenigstens annähernd in Bewegungsrichtung der Gegenstände verlaufende Ausnehmung (41) aufweist, über welche das Anschlagelement (9) mit dem dritten Hebelelement (21) zusammenwirkt.

2. Anschlagmodul nach Anspruch 1,
**dadurch gekennzeichnet,**
**dass** der elektrische Drehantrieb (13) über eine Pleueleinrichtung (47) mit der Kniehebeleinrichtung (11) zusammenwirkt.

3. Anschlagmodul **nach Anspruch 2,**
**dadurch gekennzeichnet,**
**dass** die Pleueleinrichtung (47) an ihrem der Kniehebeleinrichtung (11) abgewandten Ende mit einem von dem elektrischen Drehantrieb (13) antreibbaren Nabenelement (43) zusammenwirkt, wobei ein insbesondere runder Endbereich (49) der Pleueleinrichtung (47) derart exzentrisch zu einer Antriebsachse (45) des elektrischen Drehantriebs (13) angeordnet ist, dass eine Drehung des Nabenelements (43) in einer wenigstens teilweise vertikalen Bewegung der Pleueleinrichtung(47) resultiert, mittels welcher das Anschlagelement (9, 202) über die Kniehebeleinrichtung (11) zwischen dessen erster Endposition und dessen zweite Endposition bewegbar ist.

4. Anschlagmodul nach einem der Ansprüche **1 bis 3,**
**dadurch gekennzeichnet,**
**dass** das erste Hebelelement (17) und das zweite Hebelelement (19) der Krüehebeleinrichtung (11) bei sich in der ersten Position befindlichem Anschlagelement (9, 202) wenigstens annähernd parallel zueinander angeordnet sind.

5. Anschlagmodul nach einem der Ansprüche **1 bis 4,**
**dadurch gekennzeichnet,**
**dass** der Körper (42) des Anschlagelements (9) in einem dem dritten Hebelelement (21) abgewandten zweiten Endbereich mit einer Dämpfungseinrichtung (15) zur Dämpfung einer Bewegung des Anschlagelements (9) von einer ersten Anschlagstellung in eine gegenüber der ersten Anschlagstellung wenigstens annähernd in Bewegungsrichtung der Gegenstände versetzte zweite Endanschlagstellung bei einem an dem Anschlagelement (9) anliegenden Gegenstand zusammenwirkt.

6. Anschlagmodul nach Anspruch **5,**
**dadurch gekennzeichnet,**
**dass** die Dämpfungseinrichtung (15) eine Bewegung des Anschlagelements (9) von der ersten Anschlagstellung in die zweite Endanschlagstellung mit einem Rotationsdämpfer (73) dämpft.

7. Anschlagmodul nach Anspruch **6,**
**dadurch gekennzeichnet,**
**dass** der Rotationsdämpfer (73) einen inneren Rotor (75) und einen äußeren Rotor (77) aufweist und insbesondere als Gerotor ausgebildet ist, wobei der äußere Rotor (77) exzentrisch zu dem inneren Rotor (75) angeordnet ist und eine Anzahl von mit Zähnen (79) des inneren Rotors (75) zusammenwirkenden Ausnehmungen (81) des äußeren Rotors (77) um eins größer als die Anzahl der Zähne (79) des inneren Rotors (75) ist.

8. Anschlagmodul nach einem der Ansprüche **6 oder 7,**
**dadurch gekennzeichnet,**
**dass** der Rotationsdämpfer (73) eine insbesondere verstellbar ausgebildete Drosseleinrichtung (83) aufweist.

9. Anschlagmodul nach einem der Ansprüche **5 bis 8,**
**dadurch gekennzeichnet,**
**dass** eine Rückstelleinrichtung (69) vorgehen ist, mittels welcher das Anschlagelement (9) von seiner zweiten Endanschlagstellung in die erste Anschlagstellung bewegbar ist.

10. Anschlagmodul nach Anspruch **5,**
**dadurch gekennzeichnet,**
**dass** die Dämpfungseinrichtung (15) eine Bewegung des Anschlagelements (9) von der ersten Anschlagstellung in die zweite Endanschlagstellung mit einem pneumatischen Dämpfer dämpft.

11. Anschlagmodul nach Anspruch **5,**
**dadurch gekennzeichnet,**
**dass** die Dämpfungseinrichtung (15) eine Bewegung des Anschlagelements (9) von der ersten Anschlagstellung in die zweite Endanschlagstellung mit einem elektrischen Dämpfer dämpft.

## Claims

1. Stop module, in particular for automated machining and conveying equipment, wherein a stop element (9, 202) for articles moving in a direction of movement (X) in a movement plane is arranged on a basic body (3), and wherein the stop element (9, 202) is movable by means of an electric rotary drive (13) between a first end position, in which the stop element (9, 202) projects into the movement plane of the articles, and a second end position, in which the stop element (9, 202) enables a movement of articles in the movement plane, wherein the movement of the stop element (9, 202) into and out of the movement plane of articles is implemented by means of a toggle lever device (11) which cooperates with the electric rotary drive (13) and which comprises at least a first and a second lever element (17, 19) which are connected to one another via a first articulation point (18), **characterized in that** the electric rotary drive (13) cooperates with the first articulation point (18), wherein the first lever element (17) of the toggle lever device (11), in a first end region (25), is arranged rotatably on the basic body (3) via a second articulation point (23) and, in a second end region (27), cooperates rotatably via the first articulation point (18) with a first end region (31) of the second lever element (19), and wherein a second end region (27) of the second lever element (19) cooperates via a third articulation point (35) with a third lever element (21) which is secured rotatably to the basic body via a fourth articulation point (37), wherein the stop element (9) is formed with a body (42) which extends in the direction of movement of the articles and which, in a first end region facing the third lever element (21), has a cutout (41) which extends at least approximately in the direction of movement of the articles and via which the stop element (9) cooperates with the third lever element (21).

2. Stop module according to Claim 1, **characterized in that** the electric rotary drive (13) cooperates with the toggle lever device (11) via a connecting rod device (47).

3. Stop module according to Claim 2, **characterized in that** the connecting rod device (47), at its end facing away from the toggle lever device (11), cooperates with a hub element (43) which can be driven by the electric rotary drive (13), wherein an in particular round end region (49) of the connecting rod device (47) is arranged eccentrically with respect to a drive pin (45) of the electric rotary drive (13) in such a way that a rotation of the hub element (43) results in an at least partially vertical movement of the connecting rod device (47) by means of which the stop element (9, 202) can be moved via the toggle lever device (11) between its first end position and its second end position.

4. Stop module according to one of Claims 1 to 3, **characterized in that**, when the stop element (9, 202) is in the first position, the first lever element (17) and the second lever element (19) of the toggle lever device (11) are arranged at least approximately parallel to one another.

5. Stop module according to one of Claims 1 to 4, **characterized in that**, when an article bears against the stop element (9), the body (42) of the stop element (9), in a second end region facing away from the third lever element (21), cooperates with a damping device (15) to damp a movement of the stop element (9) from a first stop position into a second end stop position offset with respect to the first stop position at least approximately in the direction of movement of the articles.

6. Stop module according to Claim 5, **characterized in that** the damping device (15) damps a movement of the stop element (9) from the first stop position into the second end stop position by means of a rotary damper (73).

7. Stop module according to Claim 6, **characterized in that** the rotary damper (73) has an inner rotor (75) and an outer rotor (77) and is designed, in particular, as a gerotor, wherein the outer rotor (77) is arranged eccentrically with respect to the inner rotor (75), and a number of cutouts (81) of the outer rotor (77) which cooperate with teeth (79) of the inner rotor (75) is larger by one than the number of teeth (79) of the inner rotor (75).

8. Stop module according to either of Claims 6 and 7, **characterized in that** the rotary damper (73) has a throttle device (83) designed, in particular, to be adjustable.

9. Stop module according to one of Claims 5 to 8, **characterized in that** a return device (69) is provided, by means of which the stop element (9) is movable from its second end stop position into the first stop position.

10. Stop module according to Claim 5, **characterized in that** the damping device (15) damps a movement of the stop element (9) from the first stop position into the second end stop position by means of a pneumatic damper.

11. Stop module according to Claim 5, **characterized in that** the damping device (15) damps a movement of the stop element (9) from the first stop position into the second end stop position by means of an electric damper.

## Revendications

1. Module de butée, notamment pour des dispositifs de traitement et de transport automatisés, dans lequel un élément de butée (9, 202) pour des objets se déplaçant dans une direction de déplacement (X) dans un plan de déplacement est disposé sur un corps de base (3), et dans lequel l'élément de butée (9, 202) peut être déplacé au moyen d'un entraînement en rotation électrique (13) entre une première position d'extrémité dans laquelle l'élément de butée (9, 202) pénètre dans le plan de déplacement des objets, et une deuxième position d'extrémité dans laquelle l'élément de butée (9, 202) libère un mouvement des objets dans le plan de déplacement, le mouvement de l'élément de butée (9, 202) dans et hors du plan de déplacement des objets étant converti par un dispositif à genouillère (11) coopérant avec l'entraînement en rotation électrique (13), qui présente au moins un premier et un deuxième élément de levier (17, 19) qui sont connectés l'un à l'autre par le biais d'un premier point d'articulation (18),
**caractérisé en ce que**
l'entraînement en rotation électrique (13) coopère avec le premier point d'articulation (18), le premier élément de levier (17) du dispositif à genouillère (11) étant disposé dans une première région d'extrémité (25) par le biais d'un deuxième point d'articulation (23) de manière rotative sur le corps de base (3) et coopérant dans une deuxième région d'extrémité (27) par le biais du premier point d'articulation (18) de manière rotative avec une première région d'extrémité (31) du deuxième élément de levier (19), et une deuxième région d'extrémité (27) du deuxième élément de levier (19) coopérant par le biais d'un troisième point d'articulation (35) avec un troisième élément de levier (21), qui est fixé de manière rotative par le biais d'un quatrième point d'articulation (37) sur le corps de base, l'élément de butée (9) étant réalisé avec un corps (42) s'étendant dans la direction du déplacement des objets, lequel présente, dans une première région d'extrémité tournée vers le troisième élément de levier (21), un évidement (41) s'étendant au moins approximativement dans la direction de déplacement des objets, par le biais duquel l'élément de butée (9) coopère avec le troisième élément de levier (21).

2. Module de butée selon la revendication 1,
**caractérisé en ce que**
l'entraînement en rotation électrique (13) coopère par le biais d'un dispositif de bielle (47) avec le dispositif à genouillère (11).

3. Module de butée selon la revendication 2,
**caractérisé en ce que**
le dispositif de bielle (47) coopère au niveau de son extrémité opposée au dispositif à genouillère (11) avec un élément de moyeu (43) pouvant être entraîné par l'entraînement en rotation électrique (13), une région d'extrémité (49), notamment ronde, du dispositif de bielle (47) étant disposée de manière excentrée par rapport à un axe d'entraînement (45) de l'entraînement en rotation électrique (13) de telle sorte qu'une rotation de l'élément de moyeu (43) résulte en un déplacement au moins partiellement vertical du dispositif de bielle (47), au moyen duquel l'élément de butée (9, 202) peut être déplacé par le biais du dispositif à genouillère (11) entre sa première position d'extrémité et sa deuxième position d'extrémité.

4. Module de butée selon l'une quelconque des revendications 1 à 3,
**caractérisé en ce que**
le premier élément de levier (17) et le deuxième élément de levier (19) du dispositif à genouillère (11) sont disposés au moins approximativement parallèlement l'un à l'autre lorsque l'élément de butée (9, 202) se trouve dans la première position.

5. Module de butée selon l'une quelconque des revendications 1 à 4,
**caractérisé en ce que**
le corps (42) de l'élément de butée (9) coopère, dans une deuxième région d'extrémité opposée au troisième élément de levier (21), avec un dispositif d'amortissement (15) pour l'amortissement d'un déplacement de l'élément de butée (9) d'une première position de butée dans une deuxième position de butée d'extrémité décalée par rapport à la première position de butée au moins approximativement dans la direction du déplacement des objets, lorsqu'un objet s'applique contre l'élément de butée (9).

6. Module de butée selon la revendication 5,
**caractérisé en ce que**
le dispositif d'amortissement (15) amortit un déplacement de l'élément de butée (9) de la première position de butée dans la deuxième position de butée d'extrémité avec un amortisseur de rotation (73).

7. Module de butée selon la revendication 6,
**caractérisé en ce que**
l'amortisseur de rotation (73) présente un rotor interne (75) et un rotor externe (77), et est réalisé notamment sous forme de gérotor, le rotor externe (77) étant disposé de manière excentrée par rapport au rotor interne (75) et un certain nombre d'évidements (81) du rotor externe (77) coopérant avec des dents (79) du rotor interne (75) étant supérieur de un au nombre des dents (79) du rotor interne (75).

8. Module de butée selon l'une quelconque des revendications 6 ou 7,
**caractérisé en ce que**
l'amortisseur de rotation (73) présente un dispositif d'étranglement (83) réalisé notamment de manière réglable.

9. Module de butée selon l'une quelconque des revendications 5 à 8,
**caractérisé en ce que**
l'on prévoit un dispositif de rappel (69) au moyen duquel l'élément de butée (9) peut être déplacé de sa deuxième position de butée d'extrémité dans la première position de butée.

10. Module de butée selon la revendication 5,
**caractérisé en ce que**
le dispositif d'amortissement (15) amortit un déplacement de l'élément de butée (9) de la première position de butée dans la deuxième position de butée d'extrémité avec un amortisseur pneumatique.

11. Module de butée selon la revendication 5,
**caractérisé en ce que**
le dispositif d'amortissement (15) amortit un déplacement de l'élément de butée (9) de la première position de butée dans la deuxième position de butée d'extrémité avec un amortisseur électrique.
